# EUROPEAN PATENT SPECIFICATION

(11) **EP 3 883 433 B1**
(45) Date of publication and mention of the grant of the patent: **28.09.2022**
(21) Application number: 19816942.7
(22) Date of filing: 15.11.2019
(51) Int. Cl.: A47J 27/10

(54) **BASE UNIT AND SYSTEM FOR LIQUID CIRCULATION AND HEATING AND FOR VACUUMIZING**
BASISEINHEIT UND SYSTEM ZUR FLÜSSIGKEITSZIRKULATION UND -ERWÄRMUNG UND ZUM VAKUUMIEREN
UNITÉ DE BASE ET SYSTÈME DE CIRCULATION ET DE CHAUFFAGE DE LIQUIDE ET DE MISE SOUS VIDE

(30) Priority: 20.11.2018 NL 2022033
(43) Date of publication of application: 29.09.2021
(73) Proprietor: Verbakel Innovation Holding B.V., 3054 NJ Rotterdam (NL)
(72) Inventor: VERBAKEL, Albert Johannes, 2911 BP Nieuwerkerk aan den IJssel (NL)
(74) Representative: Dekker-Garms, Alwine Emilie
(86) International application number: PCT/NL2019/050749
(87) International publication number: WO 2020/106138

(56) References cited:
- US-A1- 2012 137 898
- US-A1- 2012 251 695
- US-A1- 2015 335 192
- US-A1- 2017 347 824

## Description

The invention relates to a unit for liquid circulation and heating.

Such a unit is known, for example from US 2017/0347824 A1. The known unit is configured to heat or cool food sealed in a bag by thermal transfer from a temperature-controlled liquid. Vacuum sealing food into a plastic bag and then immersing the bag in hot water is known as sous-vide cooking. The known unit includes a dual-chamber container with an inner container for holding a food item to be cooked and an outer container for maintaining contact between a temperature-controlled heat transfer liquid and the inner container while the food is being cooked. The dual-chamber container includes an inlet fluid port and outflow fluid port which may be coupled directly to corresponding fluid port connectors on a temperature control unit, or an intervening fluid coupling assembly may convey heat transfer liquid between the control unit and the dual-chamber container.

A unit for sous-vide cooking is being commercialized by, amongst others, Anova^{™} as a stick. A drawback of such a stick is that it needs to be placed in a bowl or container and it needs to have a minimal water insertion. Placing the stick in the container, however takes valuable space of the container, which may make it difficult to cook larger pieces of food in the same container without changing to a larger container. Also, by using a stick, the circulation is limited since the inlet and the outlet are relatively close to each other. Moreover, the bags into which the food for sous-vide cooking is placed, are often first vacuumized before inserting into the water, so that the water can better surround the food and the heat of the water can be transferred better to the food for cooking it. This requires at least two different apparatuses in the kitchen and in view of the struggle for place on the kitchen top, there is a need for an improved solution.

Thereto, the invention provides for a base unit for liquid circulation and heating and for vacuumizing according to claim 1.

By providing a base unit that is arranged both for liquid circulation and heating and for vacuuming, a single apparatus can provide both functions either separately or simultaneously. In particular, by providing at least one air/water inlet port and at least one air/water inlet port wherein between the air/water inlet port and the air/water outlet port an air/water pump and heating element are arranged, liquid in an accessory, such as a container or a bowl or a bag, connected to the inlet port and to the outlet port, can be circulated and heated. Thus, sous-vide cooking is possible in such a container, even without an additional device in the container, so that the entire volume of the container is available for the food-to-be-cooked. Additionally, since the inlet port and the outlet port, as well as the pump are suitable for processing air as well as water, with this inlet port, outlet port and pump also vacuumizing is possible. Moreover, the base unit even is provided with an air inlet port and an air outlet port with an air vacuum pump inbetween, such that a dedicated air flow path is obtained for vacuumizing a container, such as a bag, a sack or a box, that is connected to the air inlet port. So, by providing an air/water flow path, as well as an air flow path, the liquid circulation and heating of a container connected to the air/water flow path can be done even simultaneously with the vacuumizing of a - separate - container connected to the air flow path. This makes the base unit a compact, versatile and flexible device for use, as a single apparatus, in the kitchen. This may advantageous for use for slow cooking or for sous-vide cooking.

Advantageously, the base unit comprises a controller for operational connection to a user interface. The controller is advantageously configured for controlling the air/water pump, the heating element and/or the vacuum pump, as well as the many valves in the base unit system, depending on the input parameters received from the user interface inputted therein by the user. The user interface can be a panel on the base unit itself, comprising e.g. a touch screen, or buttons and/or knobs for adjustment of parameters. Alternatively, the user interface can be a remote user interface, such as an application on a mobile telecommunications device such as a smartphone or a tablet or a computer. Many variants are possible. The controller can be configured with a wireless communications element for transmitting a wireless communications signal with a remote user interface device. Alternatively and/or additionally, the base unit can be provided with a connection element for removable connection of a remote user interface device, e.g. a smartphone or tablet, or a user interface panel. The connection element can then be wired connected to the controller for sending and receiving signals from the connected user interface. Many variants are possible, or even combinations are possible of e.g. a user interface integrated to the base unit as well as a remote wireless user interface, as well as a connectable user interface.

Advantageously, a further air/water outlet port can be provided that is fluidly connectable to a discharge element. Then, the air/water inlet port may be connected to the container, and the first the air/water outlet port can be closed, while the further, second, air/water outlet port can be open to discharge air or water to the discharge element. The base unit may thus be used for removing some excess liquid from a container, e.g. from a bag that is to be vacuumized, and then air may further be removed from the container. Also, in other cases some excess liquid may be pumped out of a container and can then be drained to the discharge element. The discharge element is preferably removably connectable to the base unit, so it can be removed from the base unit for emptying and cleaning. The discharge element may be insertable into a receiving space of the base unit, or may be as a separate element be connectable to the base unit for receiving the discharged liquid.

Advantageously, a valve is provided for opening/closing the air/water outlet ports, in particular for opening/closing a selected one of the air/water outlet ports. Depending on the input received from the user via the user interface, the controller may control one of the valves for opening or closing, as to obtain the desired operational mode of the base unit.

Preferably, in the air/water flow path at least one sensing element is arranged. Such a sensing element can be temperature sensor, a flow sensor, a pressure sensor etc. The sensing element is preferably operationally connected to the controller to provide the controller data on the sensed parameter. The controller may be configured to use this data in a feedback loop for controller e.g. a pump or the heating element. Advantageously, further a pressure sensor can be provided that is in fluid connection with the air flow path at one side and with a pressure port at another side, wherein the pressure port is arranged in the housing so that it is in contact with the environment outside the base unit. Such a pressure sensor can provide valuable information on the pressure in the container, that is to be vacuumized, with respect to the environmental pressure, and may give this information to the controller. The controller, in turn, may use this information for controlling the vacuum pump.

The air/water flow path and the air flow path are in fluid connection with each other, preferably via a flow line comprising a valve. As such, the air/water flow path and the air flow path can be connected to each other, and, advantageously, the air/water pump in the air/water flow path and the air vacuum pump in the air flow path can be connected in series to each other. As such, both pumps can work together and a higher flow rate and/or a lower pressure, i.e. more vacuum, can be obtained. So, two relatively simple and cost-effective pumps can work together and can have the same or similar performance of a larger or more expensive pump. This is beneficial in terms of efficiency, costs and performance, and provides for a large flexibility in use of the base unit.

The additional flow line connecting both flow paths can be connected to the air/water flow path upstream of the air/water pump and connected to the air flow path downstream of the pump, to allow the air/water pump to be connected in series to the air pump. In that case, the air/water pump is connected in series to the air pump and thus helps the air pump for vacuumizing the container connected to it. The air/water inlet port is then preferably closed, such that the air inlet port provides for the inflow to both pumps.

Alternatively and/or additionally, the flow line is connected to air/water flow path downstream of the pump and connected to the air flow path upstream of the pump, to allow the air pump to be connected in series to the air/water pump. Then, the air pump helps the air/water pump in pumping the inflow via the air/water inlet port through the flow path towards the outlet ports. Both flow line connections may be possible as well, such that, depending on the user input, the user or the controller may choose which flow path to open.

Advantageously, the pressure sensor that is in fluid connection with the pressure port to the environment is also in fluid connection to the air/water flow path, such that the pressure in the air/water flow path, when in fluid connection to the air flow path via the flow line, can be monitored as well. Advantageously, the pressure sensor is in fluid connection to the flow line, and via the flow line, in fluid connection to the air/water flow path. However, a direct connection between the pressure sensor and the air/water flow path can be possible as well.

The at least one air/water inlet port as well as the at least one air inlet port are advantageously provided as engagement elements for engagement with an accessory to the base unit. The accessory can be a container or a bag or a bowl or any other device. Many variants are possible for such an accessory that can be connected to the base unit. The accessory is advantageously provided with corresponding engagement elements that can engage with the engagement elements of the base unit. Advantageously, the engagement elements are designed such that when not engaged, they are closed, and when engaged, a fluid connection is being established. Preferably a valve may be present in the engagement element. The accessory may be connected directly to the base unit, i.e. the engagement elements of the accessory are in contact with the engagement elements of the base unit. Alternatively, the accessory may be connected remotely to the base unit, e.g. via an intermediate fluid line, such as a hose. Such a fluid line can be connected to the engagement element of the base unit at one end and can be connected to the engagement element of the accessory at the other end to establish a fluid connection between the base unit and the accessory. To that end, advantageously, the intermediate fluid line may be provided with corresponding engagement elements at both ends.

The invention further relates to a system comprising a base unit and at least one accessory.

A system for liquid circulation and heating and for vacuumizing is disclosed, the system comprising a base unit and an accessory, and the base unit comprising a housing, wherein the base unit comprises an air/water flow path and an air flow path and the accessory is connectable to one or both of the air/water flow path and the air flow path. The air/water flow path and the air flow path of the base unit are connected with each other via a flow line comprising a valve, so that it is possible to connect a pump arranged in the air/water flow path and a pump arranged in the air flow path in series.

Further advantageous embodiments are represented in the subclaims.

The invention will further be elucidated based on a drawing. In the drawing shows
Figure 1 schematically a flow scheme of a base unit with a separate air/water flow path and a separate air flow path;
Figure 2 schematically a flow scheme of a base unit in which the air/water flow path is connected to the air flow path;
Figure 3 schematically a flow scheme of a base unit in which the air flow path is connected to the air/water flow path;
Figure 4 schematically a flow scheme of a base unit in which the air flow path and the air/water flow path are mutually connected;
Figure 5 an embodiment of a system comprising a base unit and an accessory mounted to it;
Figure 6 a schematic representation of the embodiment of figure 5;
Figure 6a a schematic representation of an engagement element of the base unit with an engagement element of the accessory;
Figure 7 a schematic representation of a system comprising a base unit and an accessory connected to the air/water inlet port and outlet port and to the air inlet port;
Figure 8 a schematic representation of a base unit with a coffee making accessory;
Figure 9 a schematic representation of a system in which the accessory is remotely connected to the base unit;
Figure 10 a schematic representation of a system wherein the air/water inlet port and the air/water outlet port are combined in a single engagement element;
Figure 11 a schematic representation of a base unit with an alternative embodiment of an accessory;
Figure 12 a schematic representation of a base unit with a further alternative embodiment of an accessory.

It is noted that the drawings are only a schematic representation of the invention and are not to scale. Corresponding elements are indicated with the same or corresponding reference numbers.

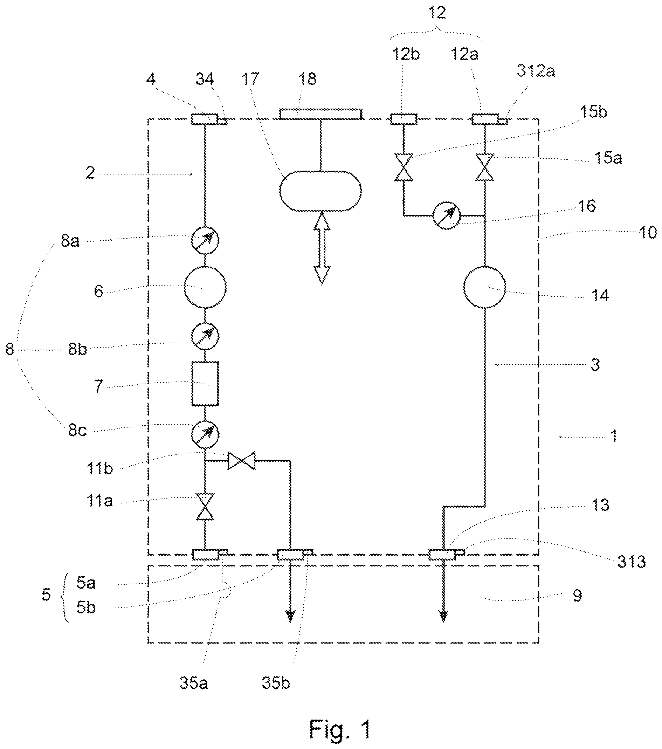

Figure 1 gives a general overview scheme of a base unit 1, in particular of the flow paths arranged in the base unit 1. The base unit 1 comprises a first flow path 2 for air/water and a second flow path 3 for air only. The air/water flow path 2 comprises at least one air/water inlet port 4 that is in fluid connection with at least one air/water outlet port 5. Between the air/water inlet port 4 and the air/water outlet port 5, an air/water pump 6 is arranged, as well as a heating element 7. Further, sensing elements 8 may be provided in the air/water flow path 2. Here, three sensors 8a, 8b, 8c are arranged. Sensor 8a may be a flow sensor, sensors 8b and 8c may be temperature sensors. The heating element 7 may be e.g. a tick film heating element or a boiler heating element or an induction heating element, or an electrical heating element, or any other heating element.

In this embodiment, there is a single air/water inlet port 4, and there are two air/water outlet ports 5a, 5b. The inlet port 4 and the outlet ports 5a, 5b are arranged at an outside of the base unit 1, such that they can be approached from outside, and can be connected to from outside the base unit, e.g. by an accessory. Preferably, the base unit 1 is provided with a housing 10, the housing 10 is here schematically represented by a striped line. In the housing 10, the inlet port 4 and the outlet ports 5a, 5b are provided. Here, they are schematically represented on the striped line of the housing, as to indicate that the inlet ports and outlet ports form an interface between the inside of the housing 10 and the outside of the housing 10. Further, all arrangements between the inlet port and the outlet port are provided inside of the housing 10.

One of the air/water outlet ports 5b are arranged as to be fluidly connectable to a discharge element 9. The discharge element 9 is preferably removably connectable to the base unit 1, and can be insertable in a receiving opening in the housing 10 or underneath the housing 10 or next to the housing 10, various arrangements are possible. The discharge element 9 can then receive liquid that is being discharged from the flow path 2, e.g. superfluous liquid that is being pumped out of the connected accessory or moisture that is in the accessory or in the flow path etc. Valves 11a, 11b are provided upstream of the air/water outlet ports 5a, 5b respectively as to open and/or close one or both of the outlet ports 5a, 5b.

In the second flow path, the air flow path 3 that extends between at least one air inlet port 12 and at least one air outlet port 13, an air pump 14 is arranged. The inlet ports 12 and the outlet port 13 are arranged in the housing 10, at the interface between the outside of the housing and the inside of the housing, such that at least the inlet port 12 is accessible from outside for coupling of an accessory thereto. The outlet port 13 can be fluidly connected to the discharge element 9, such that superfluous moisture or other particles in the air flow path 3 can be discharged to the discharge element 9. The discharge element 9 is removably connectable to the base unit 1 and can be removed from the base unit 1 for emptying and cleaning.

In this embodiment, there are two air inlet ports 12a, 12b, each associated with a valve 15a, 15b for opening and/closing of the respective air inlet ports 12a, 12b. The air inlet port 12a is arranged for connection to an accessory, such that, in operational connection, air can be pumped out of the accessory by the pump 14 to be discharged via the outlet port 13. A pressure sensor 16 is arranged inside the housing 10 in fluid connection with the air flow path 3 at one side and with the outside environment at the other side. For connection with the outside environment, the pressure sensor 16 is connected to an air inlet port 12b that can be opened or closed with its associated valve 15b. Thus, the pressure sensor 16 can sense the difference in pressure between the environment outside of the housing 10 of the base unit 1 and the pressure in the upstream part of the air flow path 3, and thus in the accessory. As such, the pressure sensor 16 may sense when a connected accessory is sufficiently vacuumized.

Further, the base unit 1 comprises a controller 17 arranged inside the housing 10 that is operationally connected to the various pumps, valves or sensing elements. The controller 17 is configured to control at least the valves and the pumps. Advantageously, the controller 17 may also be configured to receive sensed data from the sensing elements 8, 16 and to use these data for controlling the valves and pumps. Preferably, the controller 17 is operationally connectable to a user interface 18. The user interface 18 can have various embodiments and combinations thereof. The user interface 18 may be a user panel onto the housing 10 of the base unit 1 comprising at touch screen and/or knobs or buttons for providing input to the controller 17. Alternatively and/or additionally, the user interface 18 may be a software application on a mobile communications device that can be wireless connectable to the controller 17 for wireless communication with the controller 17. In another example, the interface panel may be removable from the base unit 1 and may be operational both remotely from the base unit 1 as mounted to the base unit 1. Advantageously, the controller 17 is configured with a wireless communications element for sending/receiving wireless communications data with a remote device, such as a user interface. The housing 10 may be provided with at least one connection element for removable connection of a remote user interface device, e.g. a smartphone or tablet, or a user interface panel. The connection element can then be wired connected to the controller for sending and receiving signals from the connected user interface. Many variants are possible.

By providing a separate air/water flow path 2 and a separate air flow path 3, liquid circulation and heating can be done via the air/water flow path 2 and vacuumizing can be done via the air flow path 3, either separately or simultaneously. So, the base unit 1 is a compact and single apparatus for liquid circulation and heating, as required for sous-vide cooking, and for vacuumizing as well.

The air/water inlet port 4, the air inlet port 12a, the air/water outlet ports 5a, 5b and the air outlet port 13 are arranged as engagement elements 34, 312a, 35a, 35b, 313 respectively. By configuring the inlet ports and the outlet ports as engagement elements, an accessory or a discharge element can be directly connected to the inlet and/or outlet ports. As such a simple, reliable, user-friendly and efficient connection may be obtained between the accessory or discharge element and the base unit.

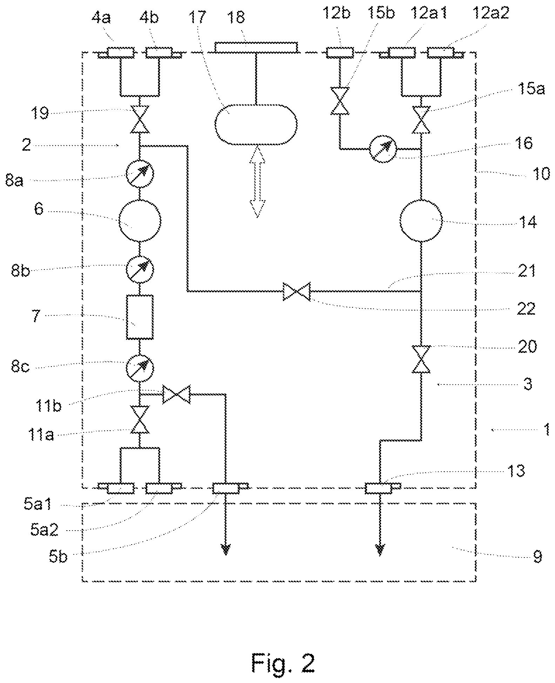

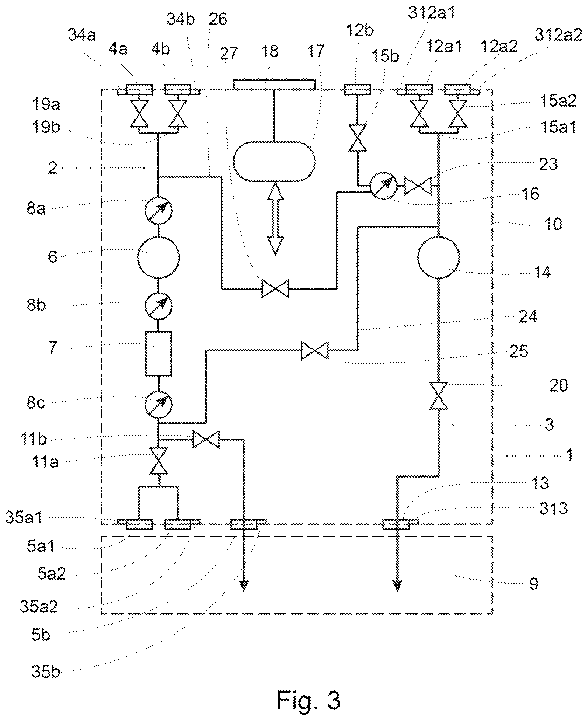

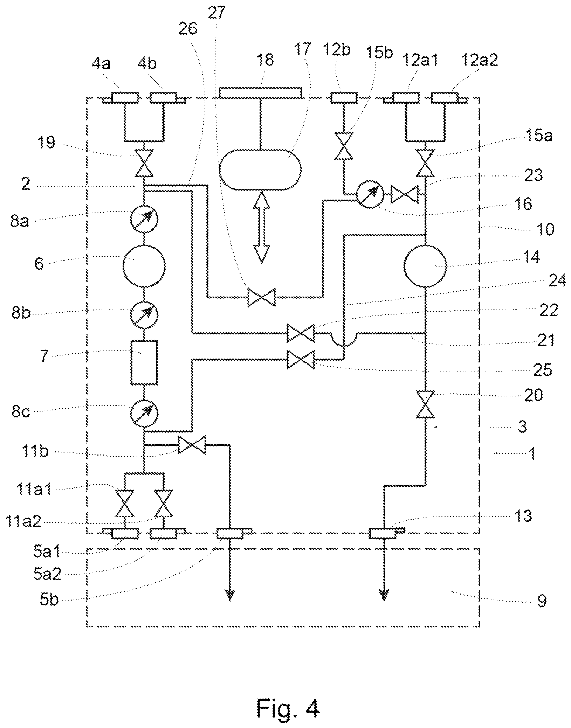

Figure 2 shows a variant on the configuration of figure 1. Here, two air/water inlet ports 4a, 4b are provided which may be operated by a single valve 19, or, as in figure 3, each by its associated valve 19a, 19b. The separate air/water inlet ports 4a, 4b may be placed at different positions on the housing 10 of the base unit 1, as to allow various embodiments and arrangements of accessories to be connected to the air/water inlet ports. Similarly, two air inlet ports 12a1, 12a2 can be provided for the air flow path 3 instead of the single air inlet port 12a of the embodiment of figure 1. The two air inlet ports 12a1, 12a2 can be operated by a single valve 15a, or, as shown in figure 3, can be operated each by its associated valve 15a1, 15a2. Further, two air/water outlet ports 5a1, 5a2 are provided instead of the single air/water outlet port 5a of the embodiment of figure 1. Similarly as with the inlet ports, the air/water outlet ports 5a1, 5a2 can be operated by a single valve 11a or each by its associated valve 11a1, 11a2, as for example shown in figure 4. Here, in this embodiment the air outlet port 13 is also operated by an associated valve 20. Whether there is one, two or more inlet ports or outlet ports, these are all variants that are mutually exchangeable and can be embodied for various arrangements of the air/water flow path and the air flow path.

In the embodiment of figure 2, the air flow path 3 is connected to the air/water flow path 2 via a flow line that is connected to the air/water flow path 2 upstream of the air/water pump 6 and is connected to the air flow path 3 downstream of the air pump 14. In the flow line 21, a valve 22 is provided for connecting/disconnecting the air flow path 3 to the air/water flow path 2. Thus, the air/water pump 6 can be connected in series to the air pump 14. The air pump 14 when operationally connected to an accessory via the inlet ports 12a1, 12a2, pumps air out of the accessory. By opening the valve 22 and closing the valve 20, the air is led a second time through a pump, namely the air/water pump 6 before being discharged via one of the outlet ports 5a1, 5a2, 5b. So, by placing two pumps in series, a higher vacuum, i.e. a lower pressure can be obtained in the accessory than what would have been possible with only a single one of the pumps. Also, the vacuum may be reached faster. So, both pumps can be used in an efficient and cost-effective way.

Figure 3 shows another alternative to the embodiments of figure 1 and figure 2. Here, an additional valve 23 is provided at the pressure sensor 16 such that the pressure sensor 16 can be connected or disconnected from the air flow path 3. In this embodiment, the air flow path 3 and the air/water flow path 2 are also connected to each other with a flow line 24, with a valve 25 positioned therein. However, here, the flow line 24 is connected to the air flow path 3 upstream of the air pump 14 and is connected to the air/water flow path 2 downstream of the air/water pump 6. So, air that is being led through the first pump 6 can then via the flow line 24 being led a second time through a pump, namely the air pump 14. To that end, the valve 25 is opened and the valves 11a, 11b are closed as to direct all flow from pump 6 through the flow line 24 to pump 14 and from there, to the outlet port 13. So, in that case, the pump 14 supports the pump 6 in vacuumizing an accessory connected to the air/water flow path 2 via one of the inlet ports 4a, 4b. To sense the pressure in the air/water flow path 2, the pressure sensor 16 is also fluidly connected to the air/water flow path 2 with a flow line 26 and a valve 27 therein. In the aforementioned operational condition, the valve 23 is closed and the valve 27 is open to fluidly connect the pressure sensor 16 between the flow path 2 and the outside environment via the inlet port 12b. Here too, the air/water inlet ports 4a, 4b, the air inlet ports 12a1, 12a2, the air/water ports 5a1, 5a2, 5b and the air outlet port 13 are configured as engagement elements 34a, 34b, 312al, 312a2, 35a1, 35a2, 313 to engage with an accessory for the inlet ports 4a, 4b, 12a1, 12a2 and/or an air/water outlet port 5a1, 5a2 and with a discharge element for an air/water outlet port 5b and/or the air outlet port 13.

The embodiment of figure 4 combines the embodiments of figure 2 and of figure 3. The air/water flow path 2 and the air flow path 3 are mutually connected to each other via the flow lines 21 and 24. Both of the pumps can thus be connected in series to each other, depending on whether the accessory is connected to the air inlet port 12a, or to the at least one of the air inlet ports 12a1, 12a2, or to the air/water inlet port 4, or to the at least one of the air/water inlet ports 4a, 4b. So, a compact and versatile base unit 1 is obtained that is flexible in use as the air/water flow path 2 and the air flow path 3 can provide for the same of similar functionality due the interconnected flow paths 2, 3 via the flow lines 21, 24.

The flow line 21 connects upstream of the pump 6 in the air/water flow path 2 and downstream of the pump 14 in the air flow path 3, with a valve 22 arranged in it. The flow line 24 connects downstream of the pump 6 in the air/water flow path 2 and upstream of the pump 14 in the air flow path 3, with a valve 25 arranged in it to open or close the flow line 24. Further, the pressure sensor 16 is also fluidly connected to the air/water flow path 2 via the flow line 26 and with the valve 27 arranged in it. Thus, when the pump 14 is connected in series with the pump 6 via opening of the valve 25, the pressure sensor 16 can sense the pressure in the air/water flow path 2 as well, such that the controller 17 can monitor when sufficient under-pressure is reached in the accessory that is connected to the at least one of the air inlet ports 4a, 4b. Depending on whether the air inlet ports 4a, 4b each individually are provided with a valve 19a, 19b, as in the embodiment shown in figure 3, or are provided with a single valve 19 for both air inlet ports 4a, 4b, as in the embodiment of figure 4, the accessory can be connected to at least one air inlet port 4a, 4b, while the other one can be closed by its associated valve, or the accessory can be connected to both air inlet ports 4a, 4b. It is noted that both variants are interchangeable for any of the embodiments of figures 1-4. Instead of two inlet ports 4a, 4b, a single inlet port can be provided, or more than two inlet ports can be provided. They can be arranged in such a way in the housing 10 of the base unit 1 that the accessory can be coupled in a unique position to the inlet ports or, alternative, that the accessory can be coupled in various positions to the inlet ports, depending on the user friendliness that may be obtained.

In the embodiments shown in figures 1-4, it is noted that the flow line 24 connects downstream of the air/water pump 6 in the air/water flow path 2, and even downstream of the heating element 7. Alternatively, the flow line 24 can be connected upstream of the heating element 7 and downstream of the pump 6. Both variants are possible.

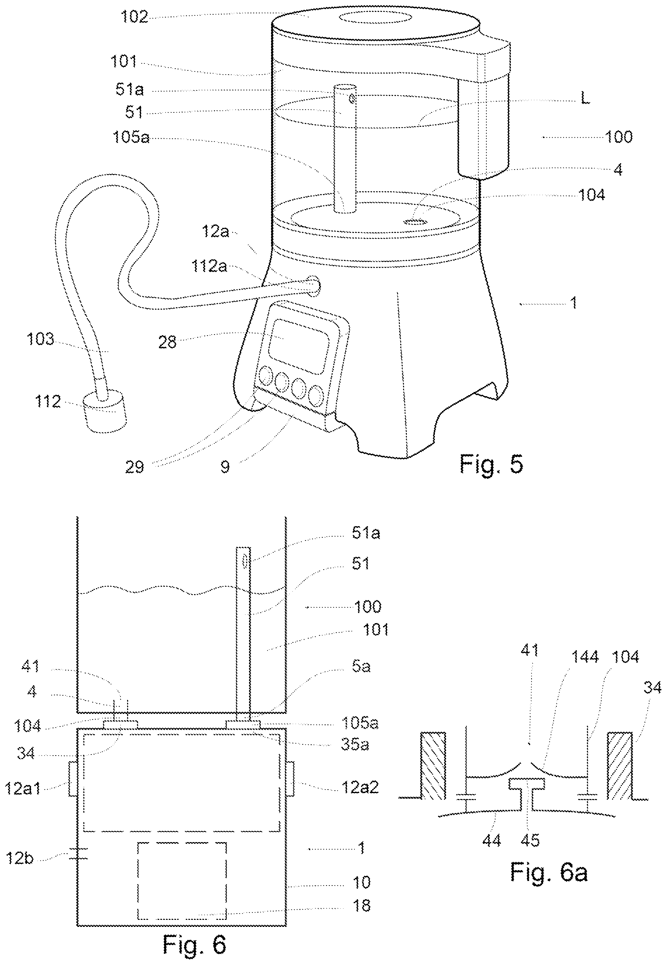

Figure 5 gives a general schematic impression of a system comprising a base unit 1 and an accessory 100. The accessory 100 is here a container 101 that can be closed with a lid 102. The accessory 100 is provided with engagement elements 104, 105a that are arranged for corresponding engagement with, in this embodiment, the air/water inlet port 4, and the air/water outlet port 5a. To that end, the engagement elements 104, 105a are advantageously located on the accessory 100 at positions that correspond with the positions of the respective inlet port and/or outlet port, such that, upon engagement of the accessory 100 to the base unit 1 a direct coupling, as to establish a fluid connection, is obtained. The engagement element 105a engages with the air/water outlet port 5a and extends into a tube 51 with an outlet opening 51a. The outlet opening 51a is preferably arranged above a maximum water level L. As such, the water inlet port 4, and the outlet opening 51a are at a distance from each other which increases and improves circulation. By enhancing circulation, due to a distance between the inlet opening and the outlet opening, a more efficient temperature distribution is possible. The heat can be better distributed in the liquid in the container, so the temperature can be kept at a more constant level compared to the conventional stick heating and circulation devices. A more equal and/or more constant temperature distribution is advantageous for sous-vide cooking and/or slow-cooking and/or other cooking methods. Advantageously, the distance between the inlet opening associated with the inlet port and the outlet opening associated with the outlet port may be between about 5 cm and about 25 cm, depending on the size of the container. Preferably, the distance is more than 5 cm, more preferably more than 7 cm, and more preferably about 10 cm. The distance is preferably as large as possible within the constraints of the accessory, e.g. given the height of the accessory. The container 101 can be closed by a lid 102, which makes the combinations advantageous for e.g. sous-vide cooking, or the cooking of water for tea-making etc.

The air inlet port 12a is here connected to a vacuum connector 112 via a flexible hose 103. The flexible hose 103 is at an end opposite the vacuum connector 112 provided with an engagement element 112a that is configured for engagement with the air inlet port 12a. The vacuum connector 112 can for example be connected to a bag or a container that is provided with a corresponding port for vacuumizing the respective bag or container. So, it is possible to at the same time use the apparatus for heating and/or circulating water in the accessory 100 and to vacuumize a bag or other container via the vacuum connector 112. This dual functioning of the apparatus might be advantageous for use in the kitchen, where kitchen top space might be rare.

Advantageously, the inlet ports and outlet ports on the base unit 1 are also arranged as engagement elements, such that, when engaging with the corresponding engagement elements of the accessory 100, a direct connection is established. For example, valve elements, such as one-way valves, may be provided in the inlet ports and/or outlet ports as well in the corresponding engagement elements to prevent leakage and/or the ingress of dirt, liquid or dust during non-use and/or non-engagement. So, preferably, upon engagement of the engagement elements of the accessory to the corresponding inlet ports or outlet ports, not only a mechanical coupling is obtained between the accessory and the base unit, but preferably also, a fluid connection is established, so that air and/or water can flow between the accessory and the base unit.

Here, the discharge element 9 is provided as a tray that is removable insertable into a receiving space in the housing 10. Of course, other variants are also possible.

In the example of figure 5, the user interface 18 comprises a display 28, as well as knobs or buttons 29. Other variants, e.g. a display only, or buttons and/or knobs only, or a connection element for connection to a remote user interface such as an application on a mobile communications device, etc. are possible.

Figure 6 schematically represents the example of figure 5 with an accessory 100, embodied as a container 101, and a base unit 1. The base unit 1 comprises an air/water inlet port 4 with an engagement element 34, and an air/water outlet port 5a with an engagement element 35a. Inside of the container 101, the air/water outlet port 5a extends into a tube 51 with the outlet opening 51a at its upper end thereof. For example, the engagement elements 34, 35a on the base unit 1 may be configured as a seat provided with a one-way valve 44, see figure 6a for an example. The engagement elements 104, 105a of the accessory 100 may be provided as protruding elements comprising a one-way valve 144 also, that may be used as feet for the accessory 100 to support upon. The protruding elements 104, 105a may engagingly fit in the seat of the corresponding engagement elements 34, 35a, upon engagement, the protruding element 104, 105a opens the one-way valve of the seat 34, 35a, while in the middle of the seat 34, 35a an extension 45 pushes the valve 144 of the respective elements 104, 105a open. As such, a mechanical connection can be established, as well as a fluid connection between the base unit 1 and the accessory 100. Of course, many variants as to establish such a connection are possible.

In the schematic representation of figure 6, the air inlet port 12a1 is provided at a side wall of the housing 10, while at another side wall a further air inlet port 12a2 is provided at another side of the housing 10, but can be provided elsewhere.

In the example of figure 5 and of figure 6, the outlet port 5a extends as a tube 51 into the container 101, and comprises an outlet opening 51a at an upper end thereof. In use, the container 101 can be filled with water until a level below the outlet opening 51a. The inlet port 4 comprises an inlet opening 41 that extends in the container 101. In use, the container 101 can be filled with water to a level that is above the inlet opening 41. So, when the pump 6 of the air/water flow path 2 is running, water can be sucked up via the inlet opening 41 of the inlet port 4 through the air/water flow path 2 including the pump 6 to the outlet port 5a where it is being discharged via the outlet opening 51a. So, a closed fluid circulation can be obtained of the fluid in the container 101. The circulation is being optimized due to the relatively large distance between the inlet port 4 and the outlet opening 51a, which is advantageous for temperature distribution.

By additionally using the heating element 7 in the air/water flow path 2, the fluid that is being circulated can be heated as well. So, this circuit comprising the air/water flow path 2 can be used for e.g. sous-vide cooking, wherein the temperature of the fluid, typically water, is kept at approximately the same temperature. Alternatively, the circuit can be used for cooking of water, wherein the water is heated more each time it is being led through the heating element 7.

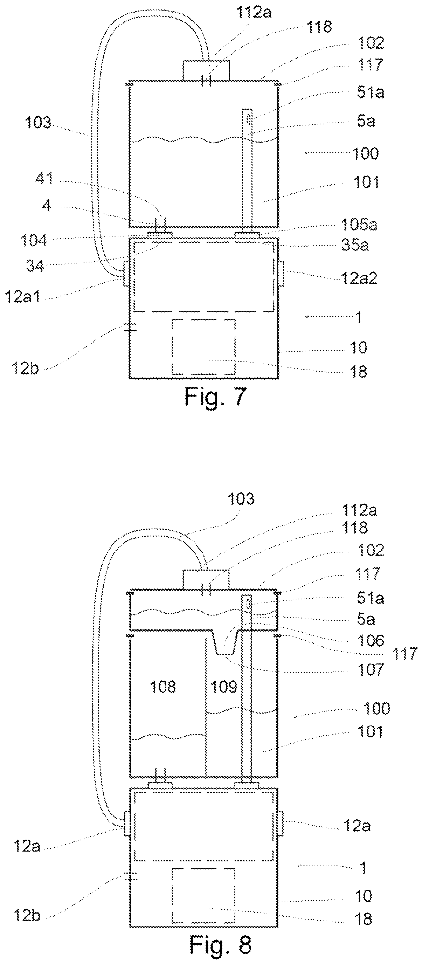

Advantageously, the container 101 can be closed with a lid 102, as schematically shown in figure 7, and the lid 102 can be provided with a port112a for fluid connection with the inlet port 12a of the base unit 1. The lid 102 can advantageously be provided with a seal 117 to allow sealing engagement of the lid 102 to the container 101. The fluid connection can operationally be established with a flexible hose 103 that at both ends thereof is provided with engagement elements for operational engagement with the respective ports 12a, 112a. By operationally connecting the accessory to the air inlet port 12a, air can be sucked out of the container 101 as to create an under-pressure, also called vacuum, inside of the container 101. By creating such an under-pressure, in the sealingly closed container 101 with lid 102 and seal 117, water inside of the container 101 can be brought to cooking at a temperature lower than the atmospheric cooking temperature of 100 deg C. This may be advantageous to bring the water more rapidly to cooking and/or for tea-making for which the correct temperature may be important for some sorts of tea. Also, an accessory 100 for coffee making can be used in combination with vacuum.

For coffee making, the lid 102 may be replaced by a coffee module and the outlet port 5a extends into the coffee module, as schematically shown in figure 8. The coffee module may comprise a receptacle 106 for coffee closed at a bottom by a filter 107. The module 102 is provided with a port 118 that is connectable, via the vacuum connector 112a and the hose 103, to the air inlet port 12a of the base unit 1. The container 101 is divided into two compartments, a compartment 108 in fluid connection with the inlet port 4 and, in use, to be filled with water, and a compartment 109, in which, in use, the coffee is discharged via the filter opening 106. Alternatively, such a split liquid container 101, with compartments 108 and 109, may be used for the rapid cooking of water, under vacuum or not, e.g. for use as a water cooker. Alternatively, the compartments 108 and 109 may be embodied as separate containers. To make coffee under vacuum or under-pressure circumstances, the module 102 has a sealingly engaged lid, with seal 117. The module 102 and/or the container 101 may be sealingly engaged as well.

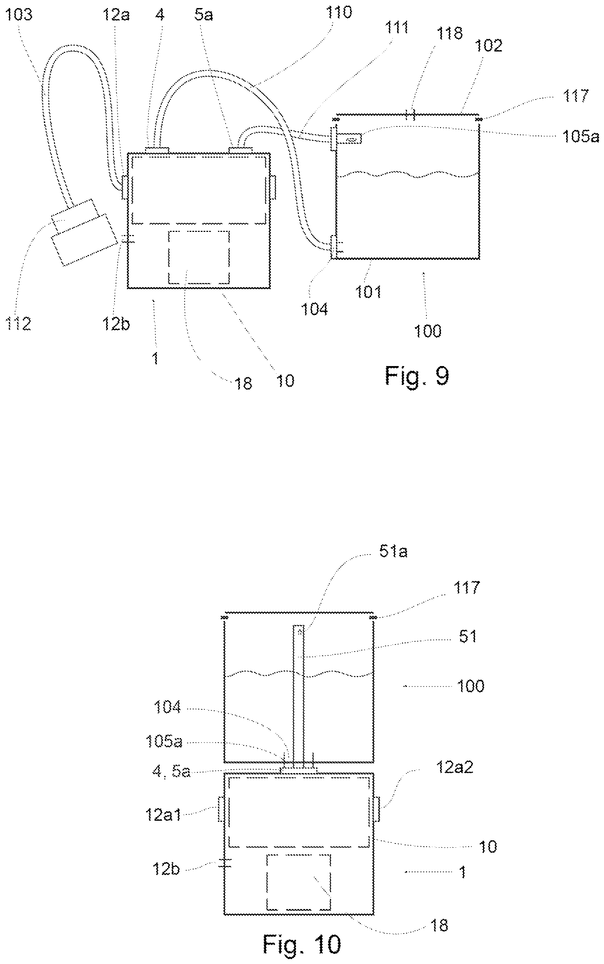

Figure 9 gives an alternative arrangement of the base unit 1 with an accessory 100, wherein the accessory 100 is here remotely connected to the base unit 1 via intermediate flexible hoses 110, 111. The flexible hoses 110, 111 connect the air/water inlet port 4 and the air/water outlet port 5a on the base unit 1 with the corresponding ports 104, 105a on the accessory 100. So, the accessory 100 can be positioned on top of the base unit 1 in direct coupling with the base unit 1, or can be positioned remote to the base unit 1 in connection with the base unit 1 via e.g. flexible hoses. To the air inlet port 12a a flexible hose with a vacuum connector 112a can be provided. Such vacuum connector 112 can for example be connected to a bag or a container that is provided with a corresponding port for vacuumizing the respective bag or container. Of course, the ports 104, 105a on the container 101 can be located at various positions, e.g. in the bottom, or in the lid 102, or one port at one side and the other port at the other side etc. Alternatively, the port 104, 105a may be combined and inserted into the container 101 through a - preferably sealed - opening in the lid, wherein the outlet opening of the port 105a is at a distance from the inlet opening of the port 104 to increase circulation. Many variants are possible.

Figure 10 gives an alternative to the separate air/water inlet port and air/water outlet port of the embodiments of figures 5-9. Here, the air/water inlet port 4 and the air/water outlet port 5a are combined in a single engagement element, with the accessory 100 also having a corresponding single engagement element. Although, the inlet port 4 and the outlet port 5a are combined in a single engagement element, the distance between the outlet opening 51a and the inlet opening remains to optimize circulation. So, the positioning of the accessory 100 to the base unit 1 can be done omnidirectional which gives a more intuitive use of the accessory to the base unit. Whereas, when the air/water inlet port 4 and the air/water outlet opening 51a are positioned at a distance from each other, positioning of the accessory to the base unit needs to be done more carefully as not to accidentally misalign the accessory to the base unit. However, to avoid misalignment the engagement elements of the air/water inlet port and of the air/water outlet port can be designed uniquely different so that misalignment is not possible.

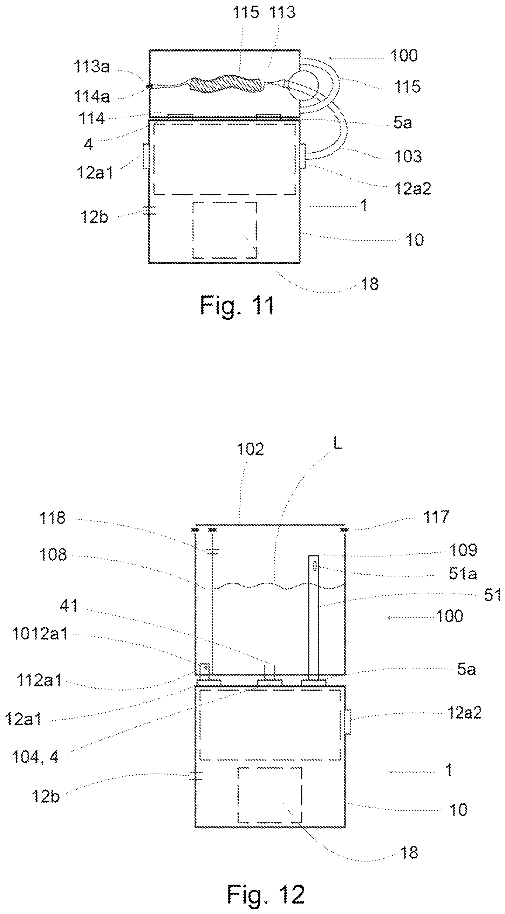

Figure 11 shows a further alternative accessory 100 that is connectable to the base unit 1. Here, the accessory 100 comprises a sous-vide cooking apparatus comprising two parts 113, 114 that are hingeable with respect to each other and at an inner side 113a, 114a provided with a flexible surface. The food to be cooked 115 is positioned between the parts 113, 114 and air is being sucked out in the space between the flexible surfaces 113a, 114a via the flexible hose 103 and the air inlet port 12a2. Water is being circulated via the air/water inlet port 4, air/water outlet port 5a and the flexible hose 115 connecting both compartments 113, 114. So, sous-vide cooking is possible in an alternative fashion.

Figure 12 shows an alternative embodiment of the accessory 100 with a container 101 having a lid 102 that is sealingly engageable, with seal 117, to the container 101. The air inlet port 12a1 is here provided on a top side of the base unit 1 engageable with a bottom side of the container 101. The container 101 has two compartments 108, 109 as well, which in this embodiment are fluidly connected to each other via the port 118. The port 118 can be an opening, or a valve etc. The port 118 is provided well above the maximum allowable liquid level L in the compartment 109. The compartment 108 is the so-called 'vacuum compartment' as this compartment is connected to the air inlet port 12a1. The air inlet port 12a1 or the container 101 may be provided with an engagement element 112a1 having an air inlet opening 1012a1. In other embodiments, the engagement element 112a1 may be provided as a vacuum connector at an end of a flexible hose.

In further alternative embodiments, a smoke cartridge can be connected to the air/water inlet port 4 and then, the smoke can be directed to a container connected to the air/water outlet port 5a to smoke the food inside the container. Alternatively, such a smoke cartridge may also be connected to the air flow path 3. Instead of the represented container 100, an alternative container 100 may be used having a receiving space for receiving food that is to be heated au-bain-marie, e.g. a U-shaped bowl can be used in which the inner space provided by the U-shape can be used for the food, such as chocolate or cheese. To the inlet ports and/or outlet ports filters may be provided to limit or reduce pollution of the upstream systems. Also, marinating of food can advantageously be done in a vacuum environment, as this may give a more intense result and/or can be done more rapidly. More advantageously, the vacuum may even be pulsed, e.g. a vacuum may exist for approximately 1-5 minutes, then atmospheric pressure may return for a few seconds up to 1 minute after which the vacuum can be established again, which advantageously gives a more intense result for the marinated food.

For the purpose of clarity and a concise description features are described herein as part of the same or separate embodiments, however, it will be appreciated that the scope of the invention may include embodiments having combinations of all or some of the features described. In view of this passage it is evident to the skilled reader that the variants of claim 1 as filed may be combined with other features described in the application as filed, in particular with features disclosed in the dependent claims, such claims usually relating to the most preferred embodiments of an invention. In particular it is noted that all of the embodiments of figures 1-4 can be interchanged with any of the variants of figures 5-12.

In a further aspect, the invention relates to a system comprising a base unit 1 and at least one accessory 100, wherein the base unit 1 comprises a housing 10, wherein the housing 10 comprises at least one air/water inlet port 4 and at least one air/water outlet port 5 in fluid connection with the at least one air/water inlet port 4 forming an air/water flow path 2 of the base unit 1, and further comprises at least one air inlet port 12 and at least one air outlet port 13 in fluid connection with the at least one air inlet port 12 forming an air flow path 3 of the base unit 1, and wherein the accessory 100 comprises at least two engagement elements 104, 105a for engagement with at least an air/water inlet port 4 and an air/water outlet port 5 of the base unit 1. Preferred options include i) the accessory 100 being removably connectable to the base unit 1, ii) the accessory 100 being a container 101 that can be closed with a lid 102, and an engagement element 105a of the accessory 100 for engagement with the air/water outlet port 5 extending into a tube 51 with an outlet opening 51a that is arranged above a maximum water level L of the container 101, and iii) a distance between an inlet opening 41 and an outlet opening 51 of the accessory 100 being as large as possible within the constraints of the accessory 100, e.g. given the height of the accessory 100, the distance preferably between about 5 cm and about 25 cm, wherein the distance may be more than 5 cm, more preferably more than 7 cm, e.g. about 10 cm.

In respect of the base unit 1 that is included in the system introduced and described in the preceding paragraph, it is noted that it is practical if in the air/water flow path 2 between the air/water inlet port 4 and the air/water outlet port 5 an air/water pump 6 and a heating element 7 are arranged inside the housing 10, and if in the air flow path 3 between the air inlet port 12 and the air outlet port 13 an air pump 14 is arranged inside the housing 10. Also, it may be so that the air/water flow path 2 and the air flow path 3 are connected with each other via a flow line 21, 24 comprising a valve 22, 25. Further, the options defined in any of claims 2-11 are applicable to the base unit 1 that is part of the system.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope of the invention defined in the following claims.

## Claims

1. A base unit (1) for liquid circulation and heating and for vacuumizing, the base unit (1) comprising
a housing (10);
wherein the housing (10) comprises at least one air/water inlet port (4) and at least one air/water outlet port (5) in fluid connection with the at least one air/water inlet port (4) forming an air/water flow path (2) of the base unit (1), and further comprises at least one air inlet port (12) and at least one air outlet port (13) in fluid connection with the at least one air inlet port (12) forming an air flow path (3) of the base unit (1);
wherein in the air/water flow path (2) between the air/water inlet port (4) and the air/water outlet port (5) an air/water pump (6) and a heating element (7) are arranged inside the housing (10); and
wherein in the air flow path (3) between the air inlet port (12) and the air outlet port (13) an air pump (14) is arranged inside the housing (10);
**characterized in that** the air/water flow path (2) and the air flow path (3) are connected with each other via a flow line (21, 24) comprising a valve (22, 25).

2. The base unit (1) according to claim 1, wherein the flow line (21) is connected to the air/water flow path (2) upstream of the air/water pump (6) and connected to the air flow path (3) downstream of the air pump (14), to allow the air/water pump (6) to be connected in series to the air pump (14).

3. The base unit (1) according to claim 1 or 2, wherein the flow line (24) is connected to air/water flow path (2) downstream of the air/water pump (6) and connected to the air flow path (3) upstream of the air pump (14), to allow the air pump (14) to be connected in series to the air/water pump (6).

4. The base unit (1) according to any of the preceding claims, further comprising a pressure sensor (16) in fluid connection with the air flow path (3) and with a pressure port arranged in the housing (10).

5. The base unit (1) according to claim 4 insofar as dependent on claim 3, wherein the pressure sensor (16) is in fluid connection to the air/water flow path (2).

6. The base unit (1) according to any of the preceding claims, further comprising a controller (17) for operational connection to a user interface (18).

7. The base unit (1) according to any of the preceding claims, comprising a further air/water outlet port (5) that is fluidly connectable to a discharge element (9).

8. The base unit (1) according to claim 7, wherein the discharge element (9) is removably connectable to the housing (10).

9. The base unit (1) according to claim 7 or 8, further comprising a valve (11) for opening and closing a selected one of the air/water outlet ports (5).

10. The base unit (1) according to any of the preceding claims, wherein in the air/water flow path (2) at least one sensing element (8) is arranged, such as a temperature sensor (8b, 8c), a flow sensor (8a), a pressure sensor.

11. The base unit (1) according to any of the preceding claims, wherein the air/water inlet port (4) and the air inlet port (12) are provided as engagement elements for engagement with an accessory (100) to the base unit (1).

12. A system comprising a base unit (1) according to any of the claims 1-11 and at least one accessory (100), wherein the accessory (100) comprises at least two engagement elements (104, 105a) for engagement with at least an air/water inlet port (4) and an air/water outlet port (5) of the base unit (1).

13. The system according to claim 12, wherein the accessory (100) is removably connectable to the base unit (1).

14. The system according to claim 12 or 13, wherein the accessory (100) is a container (101) that can be closed with a lid (102), wherein an engagement element (105a) of the accessory (100) for engagement with the air/water outlet port (5) extends into a tube (51) with an outlet opening (51a) that is arranged above a maximum water level (L) of the container (101).

15. The system according to any of claims 12-14, wherein a distance between an inlet opening (41) and an outlet opening (51) of the accessory (100) is more than 5 cm.

16. The system according to any of claims 12-14, wherein a distance between an inlet opening (41) and an outlet opening (51) of the accessory (100) is more than 7 cm.

## Patentansprüche

1. Basiseinheit (1) zur Flüssigkeitszirkulation und -erwärmung und zum Vakuumieren, wobei die Basiseinheit (1) ein Gehäuse (10) umfasst;
wobei das Gehäuse (10) mindestens eine Luft/Wasser-Einlassöffnung (4) und mindestens eine Luft/Wasser-Auslassöffnung (5) in Fluidverbindung mit der mindestens einen Luft/Wasser-Einlassöffnung (4), einen Luft/Wasser-Strömungsweg (2) der Basiseinheit (1) bildend, umfasst und ferner mindestens eine Lufteinlassöffnung (12) und mindestens eine Luftauslassöffnung (13) in Fluidverbindung mit der mindestens einen Lufteinlassöffnung (12), einen Luftströmungsweg (3) der Basiseinheit (1) bildend, umfasst;
wobei in dem Luft/Wasser-Strömungsweg (2) zwischen der Luft/Wasser-Einlassöffnung (4) und der Luft/Wasser-Auslassöffnung (5) eine Luft/Wasser-Pumpe (6) und ein Heizelement (7) innerhalb des Gehäuses (10) angeordnet sind; und
wobei in dem Luftströmungsweg (3) zwischen der Lufteinlassöffnung (12) und der Luftauslassöffnung (13) eine Luftpumpe (14) innerhalb des Gehäuses (10) angeordnet ist;
**dadurch gekennzeichnet, dass** der Luft/Wasser-Strömungsweg (2) und der Luftströmungsweg (3) über eine Strömungsleitung (21, 24) mit einem Ventil (22, 25) miteinander verbunden sind.

2. Basiseinheit (1) nach Anspruch 1, wobei die Strömungsleitung (21) mit dem Luft/Wasser-Strömungsweg (2) stromaufwärts der Luft/Wasser-Pumpe (6) verbunden ist und mit dem Luftströmungsweg (3) stromabwärts der Luftpumpe (14) verbunden ist, damit die Luft/Wasser-Pumpe (6) mit der Luftpumpe (14) in Reihe geschaltet werden kann.

3. Basiseinheit (1) nach Anspruch 1 oder 2, wobei die Strömungsleitung (24) mit dem Luft/Wasser-Strömungsweg (2) stromabwärts der Luft/Wasser-Pumpe (6) verbunden ist und mit dem Luftströmungsweg (3) stromaufwärts der Luftpumpe (14) verbunden ist, damit die Luftpumpe (14) mit der Luft/Wasser-Pumpe (6) in Reihe geschaltet werden kann.

4. Basiseinheit (1) nach einem der vorhergehenden Ansprüche, ferner umfassend einen Drucksensor (16), der in Fluidverbindung mit dem Luftströmungsweg (3) und mit einem im Gehäuse (10) angeordneten Druckanschluss steht.

5. Basiseinheit (1) nach Anspruch 4, soweit abhängig von Anspruch 3, wobei der Drucksensor (16) in Fluidverbindung mit dem Luft/Wasser-Strömungsweg (2) steht.

6. Basiseinheit (1) nach einem der vorhergehenden Ansprüche, ferner umfassend eine Steuerung (17) zur betriebsbereiten Verbindung mit einer Benutzerschnittstelle (18).

7. Basiseinheit (1) nach einem der vorhergehenden Ansprüche, umfassend eine weitere Luft/Wasser-Auslassöffnung (5), die mit einem Auslasselement (9) strömungstechnisch verbindbar ist.

8. Basiseinheit (1) nach Anspruch 7, wobei das Auslasselement (9) lösbar mit dem Gehäuse (10) verbindbar ist.

9. Basiseinheit (1) nach Anspruch 7 oder 8, ferner umfassend ein Ventil (11) zum Öffnen und Schließen einer der Luft/Wasser-Auslassöffnungen (5).

10. Basiseinheit (1) nach einem der vorhergehenden Ansprüche, wobei in dem Luft/Wasser-Strömungsweg (2) mindestens ein Sensorelement (8), wie beispielsweise ein Temperatursensor (8b, 8c), ein Strömungssensor (8a), ein Drucksensor, angeordnet ist.

11. Basiseinheit (1) nach einem der vorhergehenden Ansprüche, wobei die Luft/Wasser-Einlassöffnung (4) und die Lufteinlassöffnung (12) als Eingriffselemente zum Eingriff der Basiseinheit (1) mit einem Zubehörteil (100) vorgesehen sind.

12. System umfassend eine Basiseinheit (1) nach einem der Ansprüche 1-11 und mindestens ein Zubehörteil (100), wobei das Zubehörteil (100) mindestens zwei Eingriffselemente (104, 105a) zum Eingriff mit mindestens einer Luft/Wasser-Einlassöffnung (4) und einer Luft/Wasser-Auslassöffnung (5) der Basiseinheit (1) aufweist.

13. System nach Anspruch 12, wobei das Zubehörteil (100) abnehmbar mit der Basiseinheit (1) verbindbar ist.

14. System nach Anspruch 12 oder 13, wobei das Zubehörteil (100) ein Behälter (101) ist, der mit einem Deckel (102) verschließbar ist, wobei sich ein Eingriffselement (105a) des Zubehörteils (100) zum Eingriff mit der Luft/Wasser-Auslassöffnung (5) in ein Rohr (51) mit einer Auslassöffnung (51a) erstreckt, die oberhalb eines maximalen Wasserstandes (L) des Behälters (101) angeordnet ist.

15. System nach einem der Ansprüche 12-14, wobei ein Abstand zwischen einer Einlassöffnung (41) und einer Auslassöffnung (51) des Zubehörs (100) mehr als 5 cm beträgt.

16. System nach einem der Ansprüche 12-14, wobei ein Abstand zwischen einer Einlassöffnung (41) und einer Auslassöffnung (51) des Zubehörs (100) mehr als 7 cm beträgt.

## Revendications

1. Unité de base (1) pour chauffage et circulation de liquide et pour mise sous vide, l'unité de base (1) comprenant
un boîtier (10);
dans laquelle le boîtier (10) comprend au moins un orifice d'entrée d'air/eau (4) et au moins un orifice de sortie d'air/eau (5) en connexion fluide avec l'au moins un orifice d'entrée d'air/eau (4) formant un chemin d'écoulement d'air/eau (2) de l'unité de base (1), et comprend en outre au moins un orifice d'entrée d'air (12) et au moins un orifice de sortie d'air (13) en connexion fluide avec l'au moins un orifice d'entrée d'air (12) formant un chemin d'écoulement d'air (3) de l'unité de base (1);
dans laquelle dans le chemin d'écoulement d'air/eau (2) entre l'orifice d'entrée d'air/eau (4) et l'orifice de sortie d'air/eau (5) une pompe à air/eau (6) et un élément chauffant (7) sont agencés à l'intérieur du boîtier (10); et
dans laquelle dans le chemin d'écoulement d'air (3) entre l'orifice d'entrée d'air (12) et l'orifice de sortie d'air (13) une pompe à air (14) est agencée à l'intérieur du boîtier (10); et
**caractérisé en ce que** le chemin d'écoulement d'air/eau (2) et le chemin d'écoulement d'air (3) sont connectés ensemble via une ligne d'écoulement (21, 24) comprenant une soupape (22, 25).

2. Unité de base (1) selon la revendication 1 dans laquelle la ligne d'écoulement (21) est connectée au chemin d'écoulement d'air/eau (2) en amont de la pompe à air/eau (6) et connectée au chemin d'écoulement d'air (3) en aval de la pompe à air (14), pour permettre à la pompe à air/eau (6) d'être connectée en série à la pompe à air (14).

3. Unité de base (1) selon la revendication 1 ou 2, dans laquelle la ligne d'écoulement (24) est connectée au chemin d'écoulement d'air/eau (2) en aval de la pompe à air/eau (6) et connectée au chemin d'écoulement d'air (3) en amont de la pompe à air (14) pour permettre à la pompe à air (14) d'être connectée en série à la pompe à air/eau (6).

4. Unité de base (1) selon l'une quelconque des revendications précédentes, comprenant en outre un capteur de pression (16) en connexion fluide avec le chemin d'écoulement d'air (3) et avec un orifice de pression agencé dans le boîtier (10).

5. Unité de base (1) selon la revendication 4 dépendant de la revendication 3, dans laquelle le capteur de pression (16) est en connexion fluide avec le chemin d'écoulement d'air/eau (2).

6. Unité de base (1) selon l'une quelconque des revendications précédentes, comprenant en outre une commande (17) pour connexion fonctionnelle à une interface utilisateur (18).

7. Unité de base (1) selon l'une quelconque des revendications précédentes, comprenant un autre orifice de sortie d'air/eau (5) qui peut être connecté fluidiquement à un élément d'évacuation (9).

8. Unité de base (1) selon la revendication 7, dans laquelle l'élément d'évacuation (9) peut être connecté de manière amovible au boîtier (10).

9. Unité de base (1) selon la revendication 7 ou 8, comprenant en outre une soupape (11) pour ouvrir et fermer l'un sélectionné des orifices de sortie d'air/eau (5).

10. Unité de base (1) selon l'une quelconque des revendications précédentes, dans laquelle dans le chemin d'écoulement d'air/eau (2) au moins un élément de détection (8) est agencé, comme un capteur de température (8b, 8c), un capteur d'écoulement (8a), un capteur de pression.

11. Unité de base (1) selon l'une quelconque des revendications précédentes, dans laquelle l'orifice d'entrée d'air/eau (4) et l'orifice d'entrée d'air (12) sont fournis comme éléments de prise pour faire venir en prise un accessoire (100) avec l'unité de base (1).

12. Système comprenant une unité de base (1) selon l'une quelconque des revendications 1-11 et au moins un accessoire (100), dans lequel l'accessoire (100) comprend au moins deux éléments de prise (104, 105a) pour venir en prise avec au moins un orifice d'entrée d'air/eau (4) et un orifice de sortie d'air/eau (5) de l'unité de base (1).

13. Système selon la revendication 12, dans lequel l'accessoire (100) peut être connecté de manière amovible à l'unité de base (1).

14. Système selon la revendication 12 ou 13, dans lequel l'accessoire (100) est un récipient (101) qui peut être fermé avec un couvercle (102), dans lequel un élément de prise (105a) de l'accessoire (100) pour venir en prise avec l'orifice de sortie d'air/eau (5) s'étend dans un tube (51) avec une ouverture de sortie (51a) qui est agencée au-dessus d'un niveau d'eau maximum (L) du récipient (101).

15. Système selon l'une quelconque des revendications 12-14, dans lequel une distance entre une ouverture d'entrée (41) et une ouverture de sortie (51) de l'accessoire (100) est de plus de 5 cm.

16. Système selon l'une quelconque des revendications 12-14, dans lequel une distance entre une ouverture d'entrée (41) et une ouverture de sortie (51) de l'accessoire (100) est de plus de 7 cm.
